(19) **Europäisches Patentamt** **European Patent Office** **Office européen des brevets**

(11) **EP 2 014 738 B1**

(12) **EUROPEAN PATENT SPECIFICATION**

(45) Date of publication and mention of the grant of the patent:
**01.04.2020 Bulletin 2020/14**

(51) Int Cl.:
*C09J 201/00* [(2006.01)] *C09J 11/00* [(2006.01)]

(21) Application number: **08012669.1**

(22) Date of filing: **14.07.2008**

(54) **Adhesive composition and optical member**

Haftende Zusammensetzung und optisches Element

Composition adhésive et élément optique

(84) Designated Contracting States:
**DE**

(30) Priority: **13.07.2007 JP 2007184400**

(43) Date of publication of application:
**14.01.2009 Bulletin 2009/03**

(73) Proprietor: **CHEIL INDUSTRIES INC.
Gumi-si,
Gyeongsangbuk-do 730-710 (KR)**

(72) Inventors:
- **Ogawa, Hiroshi c/o Samsung Yokohama
  Research Ins.
  Yokohama-shi
  Kanagawa (JP)**
- **Suwa, Tatsuhiro c/o Samsung Yokohama
  Research Ins.
  Yokohama-shi
  Kanagawa (JP)**
- **Song, Jung Hoon
  Eunpyeong-gu
  Seoul (KR)**

(74) Representative: **Lang, Johannes et al
Bardehle Pagenberg Partnerschaft mbB
Patentanwälte, Rechtsanwälte
Prinzregentenplatz 7
81675 München (DE)**

(56) References cited:
**EP-A- 1 693 430       WO-A-00/24839
WO-A-2005/059053   WO-A-2007/043822
WO-A1-01/25326     WO-A1-2006/043794
US-A- 5 449 709**

EP 2 014 738 B1

**Description**

The present invention relates to an adhesive composition and an optical member.

Flat panel displays are commonly laminated with various optical films combined together by adhesive layers. Also, such optical films generally have release films and/or surface protection films in order to prevent scratches and/or contamination thereof.

A surface of the flat display panel is susceptible to electrostatic discharge. If surface discharge occurs, a display side of the flat display panel may attract dust. Static charge discharge may also affect a display device of a semiconductor substrate or cause a display failure. For this reason, conventional techniques which include, for example, addition of a particular antistatic agent to an adhesive layer of a general optical film, lamination of an additional antistatic layer on a flat display panel independently of an antistatic agent that has been added to the optic film and the like, are commonly employed as a solution to these problems.

However, an adhesive layer used for a normal optical member has problems of reduced low temperature stability and/or leakage of an ionic liquid contained in the adhesive layer. Such leaked ionic liquid may cause deterioration of optical members or metal elements.

Accordingly, there is still a strong need for improvement of an adhesive layer for optical members.

It is the object of the present invention to solve the problems described above in regard to conventional techniques.

This object has been achieved by the provision of an adhesive composition according to the present claims which includes an antistatic agent substantially comprising an ionic compound with a melting point of not less than 50°C, as well as a base polymer having a glass transition temperature Tg of not more than 0°C.

More particularly, the adhesive composition of the present invention may include an antistatic agent comprising an ionic compound with a melting point of not less than 50°C so as to prevent constitutional ingredients of the adhesive from leaking out of the composition. The adhesive composition is preferably applicable to production of optical members containing the same. Prior art adhesive compositions containing anti-static agents are disclosed in WO-A-2006/043794.

Hereinafter, preferred embodiments of the present invention will be described in more detail.


Adhesive Composition

An adhesive composition according to the present invention includes an antistatic agent substantially comprising an ionic compound with a melting point of not less than 50°C as well as a base polymer having a Tg of not more than 0°C.

The base polymer contained in the composition is cross-linked using a cross-linking agent. As a result of adding the antistatic agent to the base polymer, when the adhesive composition is applied to a substrate such as an optical sheet to form an adhesive layer, the adhesive layer exhibits surface resistance, for example, ranging from $1 \times 10^8$ to $1 \times 10^{13} (\Omega/m^2)$ and, more preferably, from $1 \times 10^8$ to $1 \times 10^{11} (\Omega/m^2)$.


Antistatic Agent

An antistatic agent used in the adhesive composition according to the present invention comprises an ionic compound having a melting point of not less than 50°C. The ionic compound preferably has a melting point of more than 50°C, more preferably more than 80°C and, most preferably more than 100°C.

The melting point can be determined in consideration of melting points of different materials listed as follows and, especially, an upper limit of the melting point is about 1160°C.

An adhesive composition including an ionic compound with a melting point of not less than 50°C is applicable, for example, to an adhesive layer for an optical member used in a flat panel display such as TVs, computer terminals, etc. Alternatively, an adhesive composition containing an ionic compound with a melting point of more than 80°C is preferably used to form an adhesive layer for an optical member used in, for example, a flat panel display mountable in an automobile.

The ionic compound used in the present invention is compatible with an organic solvent for dissolving the adhesive composition as well as the base polymer. The ionic compound is preferably selected from compounds that can maintain transparency of the adhesive composition if the compound is added to the base polymer. Further, the ionic compound may be selected from compounds that allow an adhesive layer to have a specified surface resistance of not more than $1 \times 10^{13} (\Omega/m^2)$ when an adhesive composition is applied to a substrate such as an optical sheet.

The ionic compound may include at least one selected from a group consisting of imidazolium salts, pyridinium salts, alkylammonium salts, alkylpyrrolidium salts and alkylphosphonium salts.

Examples of imidazolium salts include, but are not limited to: 1,3-dimethylimidazolium chloride (m.p. 125°C); 1-butyl-2,3-dimethylimidazolium chloride (m.p. 99°C); 1-butyl-3-methylimidazolium bromide (m.p. 78°C); 1-butyl-3-methylimidazolium chloride (m.p. 65°C); 1-butyl-3-methylimidazolium methanesulfonate (m.p. 75 to 80°C); 1-butyl-1-(3,3,4,4,5,5,6,6,7,7,8,8,8-tridecafluorooctyl)-imidazolium hexafluorophosphate (m.p. 120 to 121°C); 1-ethyl-3-methylimidazolium bromide (m.p. 74°C); 1-ethyl-3-methylimidazolium chloride (m.p. 80 to 84°C); 1-ethyl-3-methylimidazolium hexafluorophosphate (m.p. 61°C); 1-ethyl-3-methylimidazolim iodide (m.p. 79°C); 1-ethyl-2,3-dimethylimidazolium chloride (m.p. 181°C); 1-methylimidazolium chloride (m.p. 75°C); 1,2,3-trimethylimidazolium methylsulfate (m.p. 113°C); 1-methyl-3-(3,3,4,5,5,6,6,7,7,8,8,8-tridecafluorooctyl)-imidazolium hexafluorophosphate (m.p. 80°C); 1-aryl-3-methylimidazolium chloride (m.p. 55°C); 1-benzyl-3-methylimidazolium chloride (m.p. 70°C); 1-benzyl-3-methylimidazolium hexafluorophosphate (m.p. 136°C); 1-benzyl-3-methylimidazolium tetrafluoroborate (m.p. 77°C), etc.

The pyridinium salts used in the present invention are 1-butyl-3-methylpyridinium bromide, 1-butyl-4-methylpyridinium bromide (m.p. 137°C); 1-butyl-4-methylpyridinium chloride (m.p. 158°C); 1-butylpyridinium bromide (m.p. 104°C); 1-butylpyridinium chloride (m.p. 132); 1-butylpyridinium hexafluorophosphate (m.p.75°C); 1-ethylpyridinium bromide (m.p. 120°C); 1-ethylpyridinium chloride (m.p. 1140°C), etc.

The alkylammonium salts used in the present invention are: cyclohexyltrimethylammonium bis(trifluoromethanesulfonyl)imide, tetra-n-butylammonium chloride (m.p. 75°C); tetrabutylammonium bromide (m.p. 119); tributylmethylammonium methylsulfate (m.p. 62°C); tetrabutylammonium bis(trifluoromethylsulfonyl)imide (m.p. 94 to 96°C); tetraethylammonium trifluoromethanesulfonate (m.p. 161 to 163°C); tetrabutylammonium benzoate (m.p. 64 to 67°C); tetrabutylammonium methanesulfate (m.p. 78 to 80°C); tetrabutylammonium nonafluorobutanesulfonate (m.p. 50 to 53°C); tetrabuthylammonium trifluoroacetate (m.p. 74 to 76°C); tetrahexylammonium tetrafluoroborate (m.p. 90 to 92°C); tetrahexylammonium bromide (m.p. 97°C); tetrahexylammonium iodide (m.p. 99°C); tetraoctylammonium chloride (m.p. 50 to 54°C); tetraoctylammonium bromide (m.p. 95 to 98°C); tetraheptylammonium bromide (m.p. 89 to 91°C); tetrapentylammonium bromide (m.p. 99°C); n-hexadecyltrimethylammonium hexafluorophosphate (m.p. 185°C), etc.

Examples of alkylpyrrolidium salts include, but are not limited to: 1-butyl-1-methylpyrrolidium bromide (m.p. 160°C or more); 1-butyl-1-methylpyrrolidium chloride (m.p. 114°C or more); 1-butyl-1-methylpyrrolidium tetrafluoroborate (m.p. 152°C), etc.

Lastly, examples of alkylphsphonium salts include, but are not limited to: tetrabutylphosphonium bromide (m.p. 104°C); tetrabutylphosphonium chloride (m.p. 62 to 66°C); tetrabutylphosphonium tetrafluoroborate (m.p. 96 to 99°C); tetrabutylphosphonium methanesulfonate (m.p. 59 to 62°C); tetrabutylphosphonium p-toluensulfonate (m.p. 54 to 57°C); tributylhexadecylphosphonium bromide (m.p. 57 to 62°C), etc.

Base Polymer

A base polymer used in the adhesive composition according to the present claims has a Tg of not more than 0°C, preferably ranging from -100 to -5°C and, more preferably ranging from -80 to -10°C. When the Tg exceeds 0°C, the base polymer containing an ionic compound does not exhibit sufficient adhesiveness.

The base polymer is an acrylic polymer comprising at least one of acrylate and/or methacrylate having 1 to 14 carbon atoms in an alkyl group as described in the present claims.

It is used in consideration of excellent compatibility with the ionic compound used in the present invention and with regard to improvement in adhesiveness of the adhesive composition according to the present invention.

The acrylic polymer used in the present invention includes at least one selected from acrylate and methacrylate (hereinafter, referred to as "(meth)acrylate") having 1 to 14 carbon atoms in an alkyl group as a principal component, in an amount of 50% by weight ("wt.%") to 100wt.%.

Preferred examples of the (meth)acrylate having 1 to 14 carbon atoms in an alkyl group include, but are not limited to: methyl(meth)acrylate; ethyl(meth)acrylate; n-butyl(meth)acrylate; tert-butyl(meth)acrylate; 2-ethylhexyl(meth)acrylate; n-octyl(meth)acrylate; isooctyl(meth)acrylate; n-nonyl(meth)acrylate; isononyl(meth)acrylate; n-decyl(meth)acrylate; isodecyl(meth)acrylate; n-dodecyl(meth)acrylate; n-tridecyl(meth)acrylate; n-tetradecyl(meth)acrylate, etc. The base polymer included in an adhesive composition for an optical member preferably contains n-butylacrylate as a principal component so as to exhibit high adhesiveness.

The base polymer preferably has a weight average molecular weight ranging from 1,000,000 to 2,000,000. Within this range, the adhesiveness to form an adhesive layer of an optical member (or optical element) is in an optimal range. The weight average molecular weight can be estimated on a polystyrene conversion basis via gel-permeation chromatography.

The base polymer may further include additional components other than the acrylic polymer described above. The additional components serve to regulate the Tg of the base polymer to 0°C or less (in general, not less than -100°C). Such additional components may include, for example: a component for enhancing cohesion and/or thermal resistance such as a sulfonic acid group containing monomer, a phosphate group containing monomer, a cyano group containing monomer, vinyl esters, an aromatic vinyl compound, etc.; or a component having functional groups to enhance adhesiveness or to act as a starting point of a cross-linking reaction such as a carboxyl group containing monomer, an acid anhydride group containing monomer, a hydroxyl group containing monomer, an amide group containing monomer, an amino group containing monomer, an epoxy group containing monomer, n-acryloyl morpholine, vinylethers, etc. The additional components may include at least one or two or more of the components described above in combination.

Examples of the sulfonic group monomer are not limited but include styrene sulfonic acid, aryl sulfonic acid, 2-(meth)acrylamido-2-methylpropane sulfonic acid, (metha)acrylamidopropane sulfonic acid, sulfopropyl(metha)acrylate, (meth)acryloyloxynapthalene sulfonic acid, etc.

The phosphate group containing monomer can be exemplified by 2-hydroxyethylacryloyl phosphate. The cyano group containing monomer can be exemplified by acrylonitrile. An example of vinyl ester is vinyl acetate. Also, the aromatic vinyl compound can be exemplified by styrene.

The carboxyl group containing monomer is not limited but includes (meth)acrylic acid, carboxyethyl(meth)acrylate, carboxypentyl(meth)acrylate, itaconic acid, maleic acid, fumaric acid, croton acid, 2-carboxyethylacrylate, etc. The acid anhydride group containing monomer may include, for example, maleic anhydride, itaconic anhydride or the like.

The hydroxyl group containing monomer is not limited but includes 2-hydroxyethyl (meth)acrylate, 2-hydroxypropyl (meth)acrylate, 4-hydroxybutyl (meth)acrylate, 6-hydroxyhexyl (meth)acrylate, 8-hydroxyoctyl (meth)acrylate, 10-hydroxydecyl (meth)acrylate, 12-hydroxylauryl (meth)acrylate, (4-hydroxymethylcyclohexyl)methyl acrylate, n-methylol (meth)acrylamide, vinyl alcohol, aryl alcohol, 2-hydroxyethyl vinylether, 4-hydroxybutylvinylether, diethyleneglycol monovinylether, etc.

The amide group containing monomer may include, for example, acrylamide, diethyl acrylamide, etc. The amino group containing monomer may include, for example, N,N-dimethylaminoethyl (meth)acrylate, N,N-dimethylaminopropyl (meth)acrylate, etc. The epoxy group containing monomer may include, for example, glycidyl (meth)acrylate, arylglycidylether, etc. An example of vinylether is vinylethylether.

The base polymer can be obtained by polymerization methods commonly used to synthesize an arylic polymer, such as solution polymerization, emulsion polymerization, bulk polymerization, suspension polymerization and so on.

Cross-Linking Agent

The adhesive composition according to a preferred embodiment of the present invention can produce an adhesive layer with improved thermal resistance by appropriately cross-linking the base polymer. In particular, the cross-linking method may comprise addition of a compound, as a proper starting point of a cross-linking reaction, which has functional groups capable of reacting with any one of carboxyl, hydroxyl, amino, amide and the like, to an acryl polymer such as an isocyanate compound, an epoxy compound, an aziridine compound, metal chelates, etc. In brief, the cross-linking method can be performed using a desired cross-linking agent.

Examples of the isocyanate compound are not particularly limited but may include: aromatic isocyanate such as tolylene diisocyanate, xylene diisocyanate, etc.; alicyclic isocyanate such as isophorone diisocyanate; and aliphatic isocyanate such as hexamethylene diisocyanate. Among these, particularly preferable is an isocynate compound and/or epoxy compound with respect to desirable cohesiveness. Such compounds can be used alone or as a combination of two or more thereof.

More particularly, preferred examples of the isocynatate compound include but are not limited to: low aliphatic polyisocyanates such as butylene diisocyanate, hexamethylene diisocyanate, etc.; alicyclic isocyanates such as cyclopentylene diisocyanate, cyclohexylene diisocyanate, isophorone diisocyanate, etc.; aromatic diisocyanates such as 2,4-tolylene diisocyanate, 4,4'-diphenylmethane diisocyanate, xylene diisocyanate, etc.; and isocyanate adducts such as trimethylolpropane/tolylene diisocyanate trimer adduct (trade name: CORONATE L), trimethylolpropane/hexamethylene diisocyanate trimer adduct (trade name: CORONATE HL), isocyanurate (isocyanurate type) (trade name: CORONATE HX), all of which are manufactured by Nippon Polyurethane Industrial Co., Ltd.

The epoxy compound includes, for example, N,N,N'N'-tetraglycidyl-m-xylenediamine (trade name: TETRAD-X), 1,3-bis(N,N-diglycidyl-aminomethyl)cyclohexane (trade name: TETRAD-C), which are both manufactured by Mitsubishi Chemicals), etc.

Such a cross-linking agent can be used alone or as a combination of two or more thereof. An amount of the cross-linking agent can be properly determined in consideration of a balance between the cross-linking agent and the base polymer to be cross-linked and, more preferably, use of an optical member. In order to obtain high thermal resistance of the base polymer by cohesiveness of an acrylic adhesive, in general, the cross-linking agent may be added to the base polymer in an amount of not less than 0.01wt.% relative to 100wt.% of the base polymer. Alternatively, an amount of the cross-linking agent combined with the base polymer is preferably 5wt.% or less to 100wt.% of the base polymer in consideration of flexibility and/or adhesiveness.

The base polymer contained in the adhesive composition according to the present invention has a cross-linking degree ranging from 50 to 80% in terms of gel fraction rate. If the gel fraction rate is within this range, the base polymer can improve adhesiveness of the adhesive composition. The gel fraction rate can be estimated by the following equation based on an initial weight and a weight after dipping and drying the adhesive composition, when dipped in ethyl acetate at 25°C for a day:

$$\text{Gel fraction rate} = \text{weight after dipping and drying/initial weight} \times 100$$

Mixing Ratio

A ratio of an antistatic agent to total weight of a combination of the base polymer and the antistatic agent preferably ranges from 0.01 to 1.8wt.%, and more preferably, 0.05 to 1.5wt.%. With a ratio of less than 0.01wt.%, the adhesive composition does not have satisfactory antistatic effects. On the other hand, if the ratio exceeds 1.8wt.%, contamination of an object to be coated by the adhesive composition of the present invention may increase.

Additional Components

The adhesive composition according to the embodiment of the present invention may further include a variety of additives in different forms such as powder, particle and/or foils commonly known in the related art according to uses thereof, which are not particularly limited but include, for example, a thickener, a surface lubricant, a leveling agent, an antioxidant, a corrosion inhibitor, a light stabilizer, a UV absorber, a polymerization inhibitor, a silane coupling agent, inorganic or organic fillers, metal powder, a pigment and the like.

Preparation of Adhesive Composition

A method for preparation of an adhesive composition according to the embodiment of the present invention may be exemplified by the following two methods:

One of the methods is, for example, that different types of monomers as a raw material of a base polymer are admixed together in an organic solvent having a boiling point of about 120°C or less such as, for example, ethyl acetate, toluene, acetone, hexanes, alcohols, followed by addition of a polymerization initiator thereto to induce polymerization of the monomers and produce the base polymer. The resulting base polymer may be obtained in the state of a solution dissolved and/or swollen in an organic solvent.

Next, an antistatic agent comprising an ionic compound is added to the organic solvent containing the base polymer and is homogeneously mixed with the base polymer.

Following this, the prepared mixture is mixed with a cross-linking agent to crosslink the base polymer and, if necessary, this is followed by addition of at least one selected from conventional additives such as a silane coupling agent. As a result, an adhesive composition of the present invention is prepared as a final product.

The adhesive composition is readily used to form an adhesive layer by applying the adhesive composition to a substrate and drying the coated substrate.

The other of the methods is, for example, that different types of monomers as a raw material of a base polymer are admixed together in an organic solvent such as ethyl acetate and, at the same time, an antistatic agent comprising an ionic compound is added thereto. To the mixture, further added is a polymerization initiator to induce polymerization of the monomers, thus resulting in a base polymer containing the antistatic agent.

Following this, a cross-linking agent is added to the resulting solution comprising the base polymer and the antistatic agent in the organic solvent so as to crosslink the base polymer and, if necessary, this is followed by addition of at least one selected from conventional additives such as a silane coupling agent. As a result, an adhesive composition of the present invention is prepared as a final product.

Like the first method, the adhesive composition can form an adhesive layer when applied to a substrate, followed by drying the coated substrate.

As disclosed above, with regard to preparation of the adhesive composition of the present invention, an antistatic agent may be added to a base polymer after preparing the base polymer, or, otherwise, may be added to a base polymer during preparation thereof. In order to obtain a homogeneous mixture of the antistatic agent and the base polymer, the antistatic polymer is preferably soluble in an organic solvent such as ethyl acetate.

Optical Member

An optical member according to the embodiment of the present invention comprises an optical sheet and an adhesive layer formed using the adhesive composition of the present invention, applied to one side or each of both sides of the optical sheet in a typical thickness ranging from 3 to 200μm, preferably, 10 to 100μm. The adhesive layer is generally coated on the optical sheet by directly applying the adhesive layer to the optical sheet. Alternatively, the adhesive layer may be first applied to another substrate (such as a thin liner) and, then, transferred to the optical sheet.

Application and coating of the adhesive layer can be performed by conventional techniques employed in manufacturing adhesive tapes, which include, for example, roll coating, gravure coating , reverse coating, roll brush, spray coating, air-knife coating, die coating, etc.

The optical sheet used in the present invention is not particularly limited so far as it is applicable to manufacture of a variety of displays and may include, for example, a polarizer, a phase contrast plate, a brightness enhancement plate, an anti-glare sheet, etc. Furthermore, the optical sheet may also include a laminate of at least two optical layers such as a laminate of a polarizer and a phase contrast plate, a laminate formed using two or more phase contrast plates, a laminate of a polarizer and a brightness enhancement plate or an anti-glare sheet, etc.

The adhesive layer (that is, the adhesive composition) formed on the optical sheet exhibits an adhesion strength ranging from 1 to 15 (N/25mm) and, more preferably, 5 to 10 (N/25mm). The adhesion strength in the range of 1 to 15 (N/25mm) is considered sufficient to embody a favorable adhesive layer for an optical member. The adhesion strength can be measured and estimated according to JIS ZO237 which is a known test method for adhesive tapes and adhesive sheets. More particularly, after leaving an optical member with an adhesive layer at 23°C under 50% RH atmosphere for 7 days, the optical member was cut to a width of 25mm. The cut sample was then attached to a glass sheet for autoclave treatment at 50°C and a pressure of 5kg/cm$^2$ for 20 minutes. Subsequently, using a tensile tester, measurement of adhesiveness of the sample was conducted with a stripping speed of 0.3m/min at a stripping angle of 180° at 23°C under 50% RH atmosphere according to JIS ZO237, so as to evaluate adhesiveness of the adhesive layer.

Since the adhesive composition of the present invention includes an antistatic agent comprising an ionic compound having a melting point of 50°C or more as well as a base polymer, the antistatic agent substantially exists in a solid state in the composition at ordinary temperature ranging from 20 to 25°C. Accordingly, the antistatic agent does not transform from a liquid state to a solid state at temperatures near room temperature thereby preventing a decrease in transparency of the composition due to precipitation of the antistatic agent. In addition, leakage of liquefied antistatic agent, contamination and/or corrosion of a member to be coated with the composition and so on are not concerns.

When an ionic compound having a melting point of more than 80°C is used as the antistatic agent, the antistatic agent is stable in a solid state at a constant temperature of not more than 70°C. Therefore, this compound is preferably used to form an adhesive layer for an optical member typically used in a flat panel display such as TVs, computer terminals and the like.

When an ionic compound having a melting point of more than 100°C is used as the antistatic agent, the antistatic agent is stable in a solid state at a constant temperature of not more than 95°C. Therefore, this compound is preferably used to form an adhesive layer for an optical member used for a particular display panel that is frequently subjected to high temperatures, for example, a flat panel display for automobiles.

The antistatic agent has a relatively high melting point of more than 50°C and, for example, even when used at a relatively low temperature such as less than room temperature, the antistatic agent can be maintained in a solid state. As a result, the adhesive composition of the present invention has better low temperature stability than an adhesive composition containing an antistatic agent comprising an ionic solution in a liquid state at room temperature.

As described above, the adhesive composition according to the embodiment of the present invention has no problem of degradation (or deterioration) even at a broad range of temperatures from -40 to 80°C and exhibits superior stability to temperature.

When the adhesive composition according to the embodiment of the present invention is applied to a substrate, that is, an optical sheet to form an adhesive layer, the adhesive layer has desired sheet resistance, for example, ranging from $1\times10^8$ to $1\times10^{13}$($\Omega$/m$^2$) and, more preferably, from $1\times10^8$ to $1\times10^{11}$($\Omega$/m$^2$), thereby exhibiting excellent antistatic performance.

Moreover, the adhesive composition according to the embodiment of the present invention contains a base polymer with a Tg of not more than 0 and, thus, can express sufficient adhesiveness.

The base polymer contained in the adhesive composition comprises at least one of acrylates and/or (meth)acrylates, which has 1 to 14 carbon atoms in an alkyl group, as a major ingredient. Accordingly, the adhesive composition has improved transparency sufficient to form an adhesive layer of an optical member.

A weight average molecular weight of the base polymer ranges from 1,000,000 to 2,000,000 and a gel fraction rate of the same ranges from 50 to 80%. Therefore, if using the adhesive composition as an adhesive layer of an optical member, the adhesive layer has improved adhesiveness sufficient to be preferably applied to the optical member.

If the adhesive composition containing a silane coupling agent is used to form an adhesive layer of an optical member, chemical bonds are formed between the silane coupling agent and functional groups on the surface of a substrate to be coated. This results in an increase in adhesion strength at an interface between the adhesive layer and the substrate. Consequently, even if a thermal expansion coefficient of the substrate is considerably different from that of the optical member, stress is concentrated at the interface between the adhesive layer and the substrate due to a difference in thermal expansion coefficients, thereby alleviating stress applied to the optical member.

The present invention will be better understood from the following examples.

Hereinafter, a method for preparation of adhesive compositions according to Examples 1 to 11 and Comparative Examples 1 to 7 will be described in detail. Furthermore, a process for fabrication of optical members according to Examples 1 to 11 and Comparative Examples 1 to 7 will be illustrated in the following description, for example, which includes application of the adhesive composition to a polarizer. Each of the fabricated optical members was subjected to a performance test.

Preparation of a copolymer composition according to Example 1

98.99 parts by weight ("wt. parts") of butylacrylate, 1wt. parts of 2-hydroxyethylacrylate and 120wt. parts of ethylacetate as a solvent were placed in a flask equipped with a reflux condenser and an agitator and heated to 65°C under a nitrogen atmosphere. As a polymerization initiator, 0.04wt. parts of AIBN was added thereto and allowed to conduct polymerization over 6 hours while maintaining the same temperature of 65°C. After completing the polymerization, an ionic compound, that is, 1-ethylpyridinium bromide was added to the reaction product in an amount of 0.01wt. parts. In order to control viscosity of the product, 280wt. parts of ethyl acetate was further added thereto. Then, cooling the product to room temperature resulted in a copolymer composition solution (referred to as "copolymer solution") containing an adhesive composition according to Example 1. A concentration of the adhesive composition in the copolymer solution was about 20wt.% while a viscosity of the copolymer solution was 4000 mPa.s. Table 1 shows a mixing ratio of ingredients in the adhesive composition, a concentration of the adhesive composition in the copolymer solution and a viscosity of the copolymer solution. Tg of a base polymer was determined, in particular, by a procedure wherein ethyl acetate was first evaporated from the adhesive composition to extract the adhesive composition from the copolymer solution, and the extracted adhesive composition was subjected to DSC (Differential Scanning Calorimetry) and Tg measurement for the base polymer contained in the adhesive composition. The results are shown in Table 1.

Preparation of copolymer composition solutions according to Examples 2 to 11

Each copolymer solution containing adhesive compositions according to Examples 2 to 11 was prepared by the same process described in Example 1, except that butylacrylate, one monomer or at least two monomers selected from 2-hydroxyethylacrylate, 2-ethylhexylacrylate, 4-hydroxybutylacrylate and acrylic acid, and ethyl acetate as a solvent were combined together and, at the same time, any one selected from 1-ethylpyridinium bromide, tetra-n-butylammonium hexafluorophosphate, n-hexadecyltrimethylammonium hexafluorophosphate and cyclohexyltrimethylammonium bis(trifluoromethanesulfonyl)imide as an ionic compound was added thereto. For each of the resulting copolymer solutions containing the adhesive compositions according to Examples 2 to 11, Table 1 shows a mixing ratio of ingredients in the adhesive composition, a concentration of the adhesive composition in the copolymer solution and a viscosity of the copolymer solution and, in addition, a Tg of a base polymer in the adhesive composition.

Preparation of copolymer composition solutions according to Comparative Examples 1 to 7

Each copolymer solution containing adhesive compositions according to Comparative Examples 1 to 7 was prepared by the same process described in Example 1, except that butylacrylate, one monomer or at least two monomers selected from 2-hydroxyethylacrylate, 2-ethylhexylacrylate, 4-hydroxybutylacrylate and acrylic acid, and ethyl acetate as a solvent were combined together and, at the same time, any one selected from alkylbis(2-hydroxyletyl)methylammonium chloride, lithium perchlorate, 1-butyl-3-methylimidazolium tetrafluoroborate, 1-octyl-3-methylimidazolium hexafluorophosphate and 1-butyl-3-methylpyridinium trifluoromethanesulfonate as an ionic compound was added thereto.

For each of the resulting copolymer solutions containing the adhesive compositions according to Comparative Examples 1 to 7, Table 2 shows a mixing ratio of ingredients in the adhesive composition, a concentration of the adhesive composition in the copolymer solution and a viscosity of the copolymer solution and, in addition, a Tg of a base polymer in the adhesive composition.

TABLE 1

| Constitutional ratio of adhesive composition | | EXAMPLE | | | | | | | | | | |
|---|---|---|---|---|---|---|---|---|---|---|---|---|
| | | 1 | 2 | 3 | 4 | 5 | 6 | 7 | 8 | 9 | 10 | 11 |
| Base polymer (%) | BA | 98.99 | 97.9 | 87.2 | 98.5 | 98.95 | 99.1 | 94.2 | 92.1 | 88.2 | 92.3 | 95.2 |
| | 2EHA | - | - | 10 | - | 5 | - | 3 | 4 | 9 | 5 | 2 |
| | HEA | 1 | - | - | 1 | - | - | 2 | - | 1 | - | 1 |
| | 4HBA | - | 2 | - | - | - | - | - | 2 | - | 1 | - |
| | AA | - | - | 1 | - | 1 | 0.8 | - | 0.7 | 0.8 | 0.7 | 0.8 |
| Ionic compound (%) | Compound 1 | 0.01 | - | - | - | 0.05 | 0.1 | 0.8 | 1.2 | - | - | - |
| | Compound 2 | - | 0,1 | - | - | - | - | - | - | 1 | - | - |
| | Compound 3 | | | 1.8 | - | - | - | - | - | - | 1 | - |
| | Compound 4 | - | - | - | 0.5 | - | - | - | - | - | - | 1 |
| Sum(%) | | 100 | 100 | 100 | 100 | 100 | 100 | 100 | 100 | 100 | 100 | 100 |
| Viscosity (mPa.s) | | 4000 | 5000 | 3500 | 3500 | 4000 | 5000 | 4000 | 4000 | 3500 | 4000 | 4000 |
| Concentration (%) | | 20 | 20 | 20 | 20 | 20 | 20 | 20 | 20 | 20 | 20 | 20 |
| Tg of base polymer (°C) | | -52 | -53 | -53 | -52 | -52 | -51 | -52 | -53 | -53 | -53 | -51 |
| Weight average molecular weight of base polymer | | 1,600,000 | 1,800,000 | 1,300,000 | 1,400,000 | 1,400,000 | 1,700,000 | 1,600,000 | 1,500,000 | 1,300,000 | 1,500,000 | 1,500,000 |

BA: butyl acrylate
2EHA: 2-ethylhexylacrylate
HEA: 2-hydroxylethylacrylate
4HBA: 4-hydroxybutylacrylate
AA: acrylic acid
Compound 1: 1-ethylpyridium bromide (made by Tokyo Casei Industries Ltd., m.p. 120°C)
Compound 2: tetra-n-butylammonium hexafluorophosphate (made by Tokyo Casei Industries Ltd., m.p. 246°C)
Compound 3: n-hexadecyltrimethylammonium hexafluorophosphate (made of Tokyo Casei Industries Ltd., m.p. 185°C)
Compound 4: cyclohexyltrimethylammonium bis(trifluoromethanesulfonyl)imide (made by Tokyo Casei Industries Ltd., m.p. above 50°C)

TABLE 2

| Constitutional ratio of adhesive composition | | COMPARATIVE EXAMPLE | | | | | | |
|---|---|---|---|---|---|---|---|---|
| | | 1 | 2 | 3 | 4 | 5 | 6 | 7 |
| Base polymer (%) | BA | 99 | 98 | 95 | 90 | 97 | 97 | 95.2 |
| | 2EHA | - | - | - | 7 | - | - | - |
| | HEA | 1 | - | - | 1 | - | 1 | 3.8 |
| | 4HBA | - | - | 2 | - | 1 | - | |
| | AA | - | 2 | - | - | - | - | - |
| Ionic compound (%) | Compound 5 | - | - | 3 | - | - | - | - |
| | Compound 6 | - | - | | 2 | - | - | - |
| | Compound 7 | - | - | - | - | 2 | - | - |
| | Compound 8 | - | - | - | - | - | 2 | - |
| | Compound 9 | - | - | - | - | - | - | 1 |
| Sum(%) | | 100 | 100 | 100 | 100 | 100 | 100 | 100 |
| Viscosity (mPa.s) | | 5000 | 4500 | 5000 | 4500 | 4500 | 4500 | 4500 |
| Concentration (%) | | 20 | 20 | 20 | 20 | 20 | 20 | 20 |
| Tg of base polymer (°C) | | -52 | -50 | -53 | -53 | -52 | -52 | -51 |
| Weight average molecular weight of base polymer | | 1,800,000 | 1,600,000 | 1,800,000 | 1,500,000 | 1,700,000 | 1,700,000 | 1,700,000 |

BA: butyl acrylate

2EHA: 2-ethylhexylacrylate

HEA: 2-hydroxylethylacrylate

4HBA: 4-hydroxybutylacrylate

AA: acrylic acid

Compound 5: alkylbis(2-hydroxyethyl)methylammonium chloride (made by Lion, trade name ESOCARD C/12, m.p. less than 25°C)

Compound 6: lithium perchlorate, m.p. less than 25°C

Compound 7: 1-butyl-3-methylimidazolium tetrafluoroborate (made of Nihon Cosei Kagaku, m.p. less than 25°C)

Compound 8: 1-octyl-3-methylimidazolium hexafluorophosphate (made by Canto Chemical Co., Inc., m.p. less than 25°C)

Compound 9: 1-butyl-3-methylpyrinium trifluoromethane sulfonate (made by Tokyo Casei Industries, Ltd., m.p. less than 25°C)

Fabrication of optical members according to Examples 1 to 11 and Comparative Examples 1 to 7 (Note Example 2 is non-inventive)

To 100wt.% of each copolymer solution containing adhesive compositions according to Examples 1 to 11 and Comparative Examples 1 to 7, as shown in Tables 1 and 2, respectively, a trimethylolpropane/tolylene diisocyanate type cross-linking agent B (Nippon Polyurethane Ind. Co., Ltd., trade name: CORONATE L) and 3-glycidoxypropylmethyl dietoxylsilane as a silane coupling agent C (Shin-Etsu Chemical Co., Ltd., trade name: Shinetsu Silicone KBM-403) were added to achieve a mixing ratio listed in Table 3 and/or Table 4, then, were homogeneously mixed to prepare an adhesive composition in a solution state.

The adhesive composition was applied to a thin PET film (manufactured by Mitsubishi Chemical Polyester Film Corp., trade name: MRF 38) to form an adhesive layer with a dry thickness of 25μm, dried at 90°C for 3 minutes to form an adhesive layer comprising the adhesive composition. The thin PET film having the adhesive layer was attached to a polarizer (manufactured by Miguan Imaging, trade name: MLPH) to produce an optical member according to each of Examples 1 to 11 and Comparative Examples 1 to 7.

The fabricated optical member was subjected to a performance test to determine and analyze a variety of properties such as adhesiveness, surface resistance, metal corrosion, light leakage, durability, substrate adhesion, contamination of a substrate to be coated, low temperature stability), and the like. Furthermore, other features were also measured and/or determined, which include a concentration of the adhesive composition in the solution, a viscosity of the adhesive composition, and a gel fraction rate of the adhesive composition after cross-linking. The gel fraction rate was estimated by an equation of [Gel fraction rate = weight after dipping and drying/initial weight $\times$ 100] on the basis of an initial weight and a weight after dipping and drying the adhesive composition, when dipped in ethyl acetate at 25°C for a day.

The performance test was performed according to the following procedure:

Surface resistance

After leaving an optical member with an adhesive layer at 23°C under 50% RH atmosphere for 7 days, surface resistance of the optical member was measured using a micro-electrometer (available from Kawaguchi Electric Works Co., Ltd.) at 23°C under 50% RH atmosphere.

Metal corrosion

After leaving an optical member with an adhesive layer at 23°C under 50% RH atmosphere for 7 days, an aluminum foil was attached to a surface of the adhesive layer and left at 60°C under 90% RH atmosphere for 2 days, followed by observing the condition of the adhesive layer. A case showing no change in the aluminum foil is denoted by an "○" while another case showing whitening of the aluminum foil is denoted by an "×".

Light leakage

After leaving an optical member with an adhesive layer at 23°C under 50% RH atmosphere for 7 days, the optical member was cut to dimensions of 120mm (MD direction of a polarizer) ×60mm and 120mm (TD direction of a polarizer)×60mm, respectively. The cut plates were attached to both sides of a glass substrate and then subjected to autoclave treatment at 50°C and a pressure of 5kg/cm² for 20 minutes. After leaving the treated glass substrate at 80°C for 120 hours, appearance of the glass substrate was observed. A case showing no light leakage is denoted by an "○" while another case showing light leakage is denoted by an "×".

Durability

After leaving an optical member with an adhesive layer at 23°C under 50% RH atmosphere for 7 days, the optical member was cut to dimensions of 120mm (MD direction of a polarizer) x60mm. The cut plate was attached to one side of a glass substrate and then subjected to autoclave treatment at 50°C and a pressure of 5kg/cm² for 20 minutes. After leaving the treated glass substrate at 80°C, then, at 60°C under 90% RH atmosphere for 120 hours, appearance of the glass substrate was observed. A case showing no foam, floatation and/or separation of the cut plate is denoted by an "○" while another case showing foam, floatation and/or separation of the cut plate is denoted by an "×".

Adhesiveness and substrate adhesion

After leaving an optical member with an adhesive layer at 23°C under 50% RH atmosphere for 7 days, the optical member was cut to a width of 25mm, attached to one side of a glass substrate, and then subjected to autoclave treatment at 50°C and a pressure of 5kg/cm$^2$ for 20 minutes. Adhesiveness of the treated glass substrate was measured using a tensile tester with a stripping speed of 0.3m/min at a stripping angle of 180° at 23°C under 50% RH atmosphere according to JIS ZO237, which is a test method for adhesive tapes and/or adhesive sheets. Alternatively, substrate (or a polarizer) adhesion was also measured. A case when the adhesive layer was not completely removed from the polarizer, is denoted by an "○" while another case where the adhesive layer was completely removed from the polarizer is denoted by an "×".

Contamination of substrate

Before and after measuring the adhesiveness as described above, a contact angle of the glass substrate was determined. When there was no variation in the contact angles before and after the measurement of adhesiveness, the glass substrate is denoted by an "○" while, if the contact angles were altered before and after the measurement of adhesiveness, the glass is denoted by an "×". Measurement of contact angles was performed according to JIS R3257, which is a test method for wettability of glass substrates.

Low temperature stability

After leaving an optical member with an adhesive layer at 23°C under 50% RH atmosphere for 7 days, the optical member was cut to dimensions of 120mm (MD direction of a polarizer) ×60mm. The cut plate was attached to one side of a glass substrate and then subjected to autoclave treatment at 50°C and a pressure of 5kg/cm$^2$ for 20 minutes. After leaving the treated substrate at -40°C for 120 hours, appearance of the glass substrate was observed. A case showing no foam, floatation and/or separation of the cut plate or no precipitation is denoted by an "○" while another case showing foam, floatation and/or separation of the cut plate and/or precipitation is denoted by an "×".

Rework

During the measurement of adhesiveness as described above, stripping conditions were observed. A case that an interface failure between the adhesive layer and the substrate was observed, is denoted by an "○" while another case that cohesive failure or DE (electro-deposition) was observed on the substrate, is denoted by an "×".

TABLE 3

| | | EXAMPLE | | | | | | | | | | |
|---|---|---|---|---|---|---|---|---|---|---|---|---|
| | | 1 | 2 | 3 | 4 | 5 | 6 | 7 | 8 | 9 | 10 | 11 |
| A. adhesive composition (wt. parts) | | 100 | 100 | 100 | 100 | 100 | 100 | 100 | 100 | 100 | 100 | 100 |
| B. cross-linking agent (wt. parts) | | 0.1 | 0.05 | 1 | 0.1 | 1 | 1.2 | 0.05 | 0.05 | 1.2 | 1.3 | 1.2 |
| C. silane coupling agent (wt. parts) | | 0.1 | 0.1 | 0.1 | 0.1 | 0.1 | 0.1 | 0.1 | 0.1 | 0.1 | 0.1 | 0.1 |
| Viscosity of adhesive composition (mPa.s) | | 3500 | 4500 | 3000 | 3000 | 3500 | 4500 | 3500 | 3500 | 3000 | 3500 | 3500 |
| Concentration of adhesive composition (%) | | 18 | 18 | 18 | 18 | 18 | 18 | 18 | 18 | 18 | 18 | 18 |
| Gel fraction rate of adhesive composition | | 70 | 67 | 75 | 65 | 70 | 75 | 68 | 68 | 73 | 73 | 73 |
| Performance test | Surface resistance ($\Omega/m^2$) | $10^{13}$ | $10^{11}$ | $10^{9}$ | $10^{10}$ | $10^{12}$ | $10^{11}$ | $10^{10}$ | $10^{10}$ | $10^{10}$ | $10^{10}$ | $10^{10}$ |
| | Metal corrosion | ○ | ○ | ○ | ○ | ○ | ○ | ○ | ○ | ○ | ○ | ○ |
| | Light leakage | ○ | ○ | ○ | ○ | ○ | ○ | ○ | ○ | ○ | ○ | ○ |
| | Durability | ○ | ○ | ○ | ○ | ○ | ○ | ○ | ○ | ○ | ○ | ○ |
| | Adhesiveness (N/25m m) | 4 | 5 | 8 | 6 | 6 | 7 | 5 | 4 | 6 | 7 | 4 |
| | Substrate adhesion | ○ | ○ | ○ | ○ | ○ | ○ | ○ | ○ | ○ | ○ | ○ |
| | Substrate contamination | ○ | ○ | ○ | ○ | ○ | ○ | ○ | ○ | ○ | ○ | ○ |
| | Low temperature stability | ○ | ○ | ○ | ○ | ○ | ○ | ○ | ○ | ○ | ○ | ○ |
| | rework | ○ | ○ | ○ | ○ | ○ | ○ | ○ | ○ | ○ | ○ | ○ |

A: adhesive composition shown in Table 1

B: trimethylolpropane/tolylene diisocyanate (Nippon Polyurethane Industry Co., Ltd., trade name: CORONATE L)

C: 3-glycidoxypropylmethyl diethoxysilane (Shin-Etsu Chemical Co., Ltd., trade name: Shinetsu Silicone KBM-403)

TABLE 4

| | | COMPARATIVE EXAMPLE | | | | | | |
|---|---|---|---|---|---|---|---|---|
| | | 1 | 2 | 3 | 4 | 5 | 6 | 7 |
| A. adhesive composition (wt. parts) | | 100 | 100 | 100 | 100 | 100 | 100 | 100 |
| B. cross-linking agent (wt. parts) | | 0.1 | 0.8 | 0.05 | 0.1 | 0.1 | 0.1 | 0.05 |
| C. silane coupling agent (wt. parts) | | 0.1 | 0.1 | 0.1 | 0.1 | 0.1 | 0.1 | 0.1 |
| Viscosity of adhesive composition (mPa.s) | | 4500 | 4000 | 4500 | 3500 | 4000 | 4500 | 5000 |
| Concentration of adhesive composition (%) | | 18 | 18 | 18 | 18 | 18 | 18 | 18 |
| Gel fraction rate of adhesive composition | | 70 | 65 | 67 | 72 | 75 | 72 | 68 |
| Performance test | Surface resistance ($\Omega/m^2$) | $10^{15}$ | $10^{15}$ | $10^{10}$ | $10^{10}$ | $10^{9}$ | $10^{9}$ | $10^{10}$ |
| | Metal corrosion | ○ | ○ | ✕ | ✕ | ○ | ○ | ○ |
| | Light leakage | ○ | ○ | ○ | ○ | ○ | ○ | ○ |
| | Durability | ○ | ○ | ○ | ○ | ○ | ○ | ○ |
| | Adhesiveness(N/25mm) | 6 | 8 | 6 | 5 | 6 | 4 | 4 |
| | Substrate adhesion | ○ | ○ | ✕ | ○ | ○ | ○ | ○ |
| | Substrate contamination | ○ | ○ | ✕ | ✕ | ✕ | ✕ | ✕ |
| | Low temperature stability | ○ | ○ | ○ | ○ | | | |
| | rework | ○ | ○ | ○ | ○ | ○ | ○ | ○ |
| A: adhesive composition shown in Table 2 B: trimethylolpropane/tolylene diisocyanate (Nippon Polyurethane Industry Co., Ltd., trade name: CORONATE L) C: 3-glycidoxypropylmethyl diethoxysilane (Shin-Etsu Chemical Co., Ltd., trade name: Shinetsu Silicone KBM-403) | | | | | | | | |

Referring to Table 3, it was found that the optical member according to Example 1 had a desirable adhesiveness of 4(N/25mm) after aging at room temperature for 7 days. Also, the adhesive layer of the optical member according to Example 1 had a surface resistance of $10^{13}(\Omega/m^2)$, and, therefore, exhibited superior antistatic properties. The optical member according to Example 1 has proved to be favorable in terms of metal corrosion, light leakage, durability, substrate adhesion, substrate contamination, low temperature stability and rework.

Likewise, all of the optical members according to Examples 2 to 11 had excellent properties including adhesiveness, surface resistance of an adhesive layer, metal corrosion, light leakage, durability, substrate adhesion, substrate contamination, low temperature stability and rework.

On the other hand, referring to Table 4, each of the optical members according to Comparative Examples 1 and 2 without addition of an antistatic agent showed a surface resistance of $10^{15}(\Omega/m^2)$, which in turn, exhibited antistatic properties inferior to those of the optical members according to Examples 1 to 11. Likewise, each of the optical members according to Comparative Examples 3 to 7 that included addition of an ionic compound having a melting point of not more than 25°C, showed poor substrate contamination compared to the optical members according to Examples 1 to 11. Moreover, the optical members according to Comparative Examples 5 to 7 had reduced low temperature stability.

From the results described above, it is clearly understood that the optical members of the present invention according to Examples 1 to 11 have excellent antistatic properties, favorable adhesiveness, no metal corrosion, superior substrate adhesion leading to a decrease in substrate contamination, and improved low temperature stability, compared to the optical members according to Comparative Examples 1 to 7.

**Claims**

1. An adhesive composition comprising an antistatic agent that includes an ionic compound having a melting point of not less than 50°C, and a base polymer having a glass transition temperature Tg of not more than 0°C, wherein the base polymer is an acryl polymer including at least one selected from acrylate and/or methacrylate, which have 1 to 14 carbon atoms in an alkyl group, in an amount of 50% by weight ("wt.%") to 100wt, wherein the base polymer is cross-linked by cross-linking agent, and the cross-linking agent is combined with the base polymer in an amount ranging from 0.01 to 5wt. parts to 100wt. parts of the base polymer, wherein the antistatic agent is added in an amount ranging from 0.01 to 1.8wt.% relative to total weight of the base polymer and the antistatic agent, and wherein the base polymer contained in the adhesive composition has a cross-linking degree ranging from 50 to 80% in terms of gel fraction rate; wherein the ionic compound is at least one selected from a group consisting of imidazolium salts, pyridinium salts, alkylammonium salts, alkylpyrrolidium salts and alkylphosphonium salts,

wherein the pyridinium salts are 1-butyl-3-methylpyridinium bromide, 1-butyl-4-methylpyridinium bromide, 1-butyl-4-methylpyridinium chloride; 1-butylpyridinium bromide, 1-butylpyridinium chloride, 1-butylpyridinium hexafluorophosphate, 1-ethylpyridinium bromide or 1-ethylpyridinium chloride,

wherein the alkylammonium salts are cyclohexyltrimethylammonium bis(trifluoromethanesulfonyl)imide, tetra-n-butylammonium chloride, tetrabutylammonium bromide, tributylmethylammonium methylsulfate, tetrabutylammonium bis(trifluoromethylsulfonyl)imide, tetraethylammonium trifluoromethanesulfonate, tetrabutylammonium benzoate, tetrabutylammonium methanesulfate, tetrabutylammonium nonafluorobutanesulfonate, tetrabutylammonium trifluoroacetate, tetrahexylammonium tetrafluoroborate, tetrahexylammonium bromide, tetrahexylammonium iodide, tetraoctylammonium chloride, tetraoctylammonium bromide, tetraheptylammonium bromide, tetrapentylammonium bromide or n-hexadecyltrimethylammonium hexafluorophosphate. and wherein Tg and gel-fraction are measured using the methods described in this specification.

2. The adhesive composition according to claim 1, wherein the base polymer further includes at least one of a sulfonic acid group containing monomer, a phosphate group containing monomer, a cyano group containing monomer, vinyl esters, an aromatic vinyl compound, a carboxyl group containing monomer, an acid anhydride group monomer, a hydroxyl group containing monomer, an amide group containing monomer, an amino group containing monomer, an epoxy group containing monomer, n-acryloyl morpholine and/or vinylethers, or a combination of two or more thereof, other than the acrylic polymer.

3. The adhesive composition according to any of claims 1 to 2, wherein the base polymer has a weight average molecular weight ranging from 1,000,000 to 2,000,000 as measured by the GPC method described in this specification.

4. The adhesive composition according to claim 1 to 3, wherein the adhesive composition is cross-linked by at least one cross-linking agent selected from a group consisting of an isocyanate compound, an epoxy compound, an aziridine compound and metal chelates or a combination of two or more thereof.

5. An optical member obtainable by applying the adhesive composition as set forth in any one of claims 1 to 4 to one or both sides of an optical sheet.

6. Use of the adhesive composition according to any of claims 1 to 4 for the preparation of an optical member.

**Patentansprüche**

1. Klebstoffzusammensetzung, umfassend ein Antistatikmittel, das eine ionische Verbindung mit einem Schmelzpunkt von nicht weniger als 50°C und ein Basispolymer mit einer Glasübergangstemperatur Tg von nicht mehr als 0°C einschließt, wobei das Basispolymer ein Acrylpolymer ist, das mindestens eines enthält, ausgewählt aus Acrylat und/oder Methacrylat, das 1 bis 14 Kohlenstoffatome in einer Alkylgruppe aufweist, in einer Menge von 50 Gewichts-% ("Gew.-%") bis 100 Gewichts-% (bzw. Gewicht), wobei das Basispolymer durch ein Vernetzungsmittel vernetzt ist, und das Vernetzungsmittel mit dem Basispolymer in einer Menge im Bereich von 0,01 bis 5 Gewichtsteilen auf 100 Gewichtsteile des Basispolymers kombiniert ist, wobei das Antistatikmittel in einer Menge im Bereich von 0,01 bis 1,8 Gew.-% relativ zu dem Gesamtgewicht des Basispolymers und des Antistatikmittels zugesetzt wird, und wobei das in der Klebstoffzusammensetzung enthaltene Basispolymer einen Vernetzungsgrad im Bereich von 50 bis 80% in Bezug auf eine Gelfraktionsrate aufweist; wobei die ionische Verbindung wenigstens eine ist, die aus einer Gruppe bestehend aus Imidazoliumsalzen, Pyridiniumsalzen, Alkylammoniumsalzen, Alkylpyrrolidiumsalzen und Alkylphosphoniumsalzen ausgewählt ist, wobei die Pyridiniumsalze 1-Butyl-3-methylpyridiniumbromid, 1-Butyl-4-methylpyridiniumbromid, 1-Butyl-4-methylpyridiniumchlorid; 1-Butylpyridiniumbromid, 1-Butylpyridiniumchlorid, 1-Butylpyridiniumhexafluorophosphat, 1-Ethylpyridiniumbromid oder 1-Ethylpyridiniumchlorid sind, wobei die Alkylammoniumsalze Cyclohexyltrimethylammoniumbis(trifluormethansulfonyl)imid, Tetra-n-butylammoniumchlorid, Tetrabutylammoniumbromid, Tributylmethylammoniummethylsulfat, Tetrabutylammoniumbis(trifluormethylsulfonyl)-imid, Tetraethylammoniumtrifluormethansulfonat, Tetrabutylammoniumbenzoat, Tetrabutylammoniummethansulfat, Tetrabutylammoniumnonafluorbutansulfonat, Tetrabutylammoniumtrifluoracetat, Tetrahexylammoniumtetrafluoroborat, Tetrahexylammoniumbromid, Tetrahexylammoniumiodid, Tetraoctylammoniumchlorid, Tetraoctylammoniumbromid, Tetraheptylammoniumbromid, Tetrapentylammoniumbromid oder n-Hexadecyltrimethylammoniumhexafluorophosphat; und wobei Tg und Gelfraktion unter Verwendung der in dieser Beschreibung beschriebenen Methoden gemessen werden.

2. Klebstoffzusammensetzung nach Anspruch 1, wobei das Basispolymer ferner mindestens eines von einem eine Sulfonsäuregruppe enthaltenden Monomer, einem eine Phosphatgruppe enthaltenden Monomer, einem eine Cyanogruppe enthaltenden Monomer, Vinylestern, einer aromatischen Vinylverbindung, einem eine Carboxylgruppe enthaltenden Monomer, einem Monomer mit Säureanhydridgruppe, einem eine Hydroxylgruppe enthaltenden Monomer, einem eine Amidgruppe enthaltenden Monomer, einem eine Aminogruppe enthaltenden Monomer, einem eine Epoxygruppe enthaltenden Monomer, n-Acryloylmorpholin und/oder Vinylethern, oder eine Kombination von zwei oder mehr davon, anders als das Acrylpolymer, einschließt.

3. Klebstoffzusammensetzung nach irgendeinem der Ansprüche 1 bis 2, wobei das Basispolymer ein gewichtsmittleres Molekulargewicht im Bereich von 1.000.000 bis 2.000.000 aufweist, wie durch die in dieser Beschreibung beschriebene GPC-Methode gemessen.

4. Klebstoffzusammensetzung nach Anspruch 1 bis 3, wobei die Klebstoffzusammensetzung durch mindestens ein Vernetzungsmittel vernetzt ist, das aus einer Gruppe bestehend aus einer Isocyanatverbindung, einer Epoxyverbindung, einer Aziridinverbindung und Metallchelaten, oder einer Kombination von zwei oder mehr davon ausgewählt ist.

5. Optisches Element, erhältlich durch Aufbringen der Klebstoffzusammensetzung wie in irgendeinem der Ansprüche 1 bis 4 angegeben, auf eine oder beide Seiten einer optischen Folie.

6. Verwendung der Klebstoffzusammensetzung gemäß irgendeinem der Ansprüche 1 bis 4 zur Herstellung eines optischen Elements.

**Revendications**

1. Composition adhésive comprenant un agent antistatique qui contient un composé ionique ayant un point de fusion non inférieur à 50 °C et un polymère de base ayant une température de transition vitreuse Tg non supérieure à 0 °C, dans laquelle le polymère de base est un polymère acrylique contenant au moins l'un choisi parmi un acrylate et/ou un méthacrylate, qui ont de 1 à 14 atomes de carbone dans un groupe alkyle, en une quantité de 50 % en poids ("%-p") à 100 %-p, dans laquelle le polymère de base est réticulé par un agent de réticulation, et l'agent de réticulation est combiné au polymère de base en une quantité comprise dans la plage de 0,01 à 5 parties en poids pour 100 parties en poids du polymère de base, dans laquelle l'agent antistatique est ajouté en une quantité comprise dans la plage de 0,01 à 1,8 %-p par rapport au poids total du polymère de base et de l'agent antistatique, et dans laquelle le polymère de base contenu dans la composition adhésive présente un degré de réticulation compris dans la plage de 50 à 80 %, exprimé par le taux de fraction de gel ; dans laquelle le composé ionique est au moins l'un choisi dans un groupe consistant en les sels d'imidazolium, les sels de pyridinium, les sels d'alkylammonium, les sels d'alkylpyrrolidium et les sels d'alkylphosphonium,
dans laquelle les sels de pyridinium sont le bromure de 1-butyl-3-méthylpyridinium, le bromure de 1-butyl-4-méthylpyridinium, le chlorure de 1-butyl-4-méthylpyridinium ; le bromure de 1-butylpyridinium, le chlorure de 1-butylpyridinium, l'hexafluorophosphate de 1-butylpyridinium, le bromure de 1-éthylpyridinium ou le chlorure de 1-éthylpyridinium,
dans laquelle les sels d'alkylammonium sont le bis(trifluorométhanesulfonyl)imide de cyclohexyltriméthylammonium, le chlorure de tétra-n-butylammonium, le bromure de tétrabutylammonium, le méthylsulfate de tributylméthylammonium, le bis(trifluorométhylsulfonyl)imide de tétrabutylammonium, le trifluorométhanesulfonate de tétraéthylammonium, le benzoate de tétrabutylammonium, le méthanesulfonate de tétrabutylammonium, le nonafluorobutanesulfonate de tétrabutylammonium, le trifluoracétate de tétrabutylammonium, le tétrafluoroborate de tétrahexylammonium, le bromure de tétrahexylammonium, l'iodure de tétrahexylammonium, le chlorure de tétraoctylammonium, le bromure de tétraoctylammonium, le bromure de tétraheptylammonium, le bromure de tétrapentylammonium ou l'hexafluorophosphate de n-hexadécyltriméthylammonium, et dans laquelle la Tg et la fraction de gel sont mesurées par utilisation des méthodes décrites dans le présent fascicule.

**2.** Composition adhésive selon la revendication 1, dans laquelle le polymère de base contient en outre au moins l'un d'un monomère contenant un groupe acide sulfonique, d'un monomère contenant un groupe phosphate, d'un monomère contenant un groupe cyano, d'esters vinyliques, d'un composé vinylaromatique, d'un monomère contenant un groupe carboxyle, d'un monomère contenant un groupe anhydride d'acide, d'un monomère contenant un groupe hydroxyle, d'un monomère contenant un groupe amide, d'un monomère contenant un groupe amino, d'un monomère contenant un groupe époxy, de la n-acryloylmorpholine et/ou de vinyléthers, ou une combinaison d'au moins deux d'entre eux, autres que le polymère acrylique.

**3.** Composition adhésive selon l'une des revendications 1 ou 2, dans laquelle le polymère de base présente une masse moléculaire massique moyenne comprise dans la plage de 1 000 000 à 2 000 000, telle que mesurée par la méthode CPG décrite dans le présent fascicule.

**4.** Composition adhésive selon les revendications 1 à 3, dans laquelle la composition adhésive est réticulée par au moins un agent de réticulation choisi dans un groupe consistant en un composé isocyanate, un composé époxy, un composé aziridine et des chélates métalliques, ou une combinaison d'au moins deux d'entre eux.

**5.** Elément optique pouvant être obtenu par application sur une face ou sur les deux faces d'une feuille optique de la composition adhésive telle qu'exposée dans l'une des revendications 1 à 4.

**6.** Utilisation de la composition adhésive selon l'une des revendications 1 à 4 pour la préparation d'un élément optique.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2006043794 A